# EUROPEAN PATENT APPLICATION

(11) **EP 2 129 188 A2**
(43) Date of publication of application: **02.12.2009**
(21) Application number: 09154998.0
(22) Date of filing: 12.03.2009
(51) Int. Cl.: H04W 76/02

(54) **Methods and apparatuses for connecting multiple Bluetooth profiles**

(30) Priority: 30.05.2008 KR 20080050884
(71) Applicant: Samsung Electronics Co., Ltd., Suwon-si, Gyeonggi-do 442-743 (KR)
(72) Inventor: Shin, Hyun-coog, Suwon-si (KR)
(74) Representative: Grünecker, Kinkeldey, Stockmair & Schwanhäusser Anwaltssozietät

(57) **Abstract**

A method for connecting multiple Bluetooth profiles and a Bluetooth apparatus using the same. The method for connecting Bluetooth profiles includes a first connecting step of connecting at least one of multiple Bluetooth profiles, and a second connecting step of connecting the remaining ones of the multiple Bluetooth profiles.

## Description

### CROSS-REFERENCE TO RELATED APPLICATIONS

This application claims priority under 35 U.S.C. § 119 (a) from Korean Patent Application No. 10-2008-0050884, filed on May 30, 2008, in the Korean Intellectual Property Office, the disclosure of which is incorporated herein by reference in its entirety.

### BACKGROUND OF THE INVENTION

### 1. Field of the Invention

The present general inventive concept relates to a method for connecting Bluetooth profiles and a Bluetooth apparatus using the same, and more particularly, to a method for connecting multiple Bluetooth profiles and a Bluetooth apparatus using the same.

### 2. Description of the Related Art

"Bluetooth" refers to a local area wireless communication standard that enables bidirectional communications based on a local area radio technology. The Bluetooth has been popularized and is prevailing due to the convenience of enabling mutual communications without using a cable.

Bluetooth profiles are required for the Bluetooth connections with peripherals. The Bluetooth profile denotes items that should be driven to execute applications. For example, if a first device wishes to listen to music through a Bluetooth communication with a second device, the first and the second devices should have a Bluetooth profile called an advanced audio distribution profile (A2DP). Also, if the first device wishes to chat with the second device through a Bluetooth communication, the first and the second devices should have a Bluetooth profile called a serial port profile (SPP).

Accordingly, in order to listen to the music and chat simultaneously, the first and the second devices should have both of the A2DP and the SPP.

However, it is also necessary to drive the 2ADP and the SPP simultaneously in order for the first device to listen to music and chat through the Bluetooth communication with the second device.

At this time, a user should select multiple Bluetooth profiles separately and connect the devices to each other for the respective profiles. Thus, the user should select several times, which causes inconvenience to the user.

Accordingly, a method for connecting multiple Bluetooth profiles and driving them more simply to execute applications has been demanded.

### SUMMARY OF THE INVENTION

The present general inventive concept provides a Bluetooth profile connection method which allows a user to connect Bluetooth profiles more easily and more conveniently to execute applications, and a Bluetooth apparatus having the same.

Additional aspects and utilities of the present general inventive concept will be set forth in part in the description which follows and, in part, will be obvious from the description, or may be learned by practice of the general inventive concept.

The foregoing and/or other aspects and utilities of the general inventive concept may be achieved by a method for connecting Bluetooth profiles, the method including a first connecting step in which, if a connecting command for at least one of multiple Bluetooth profiles is input, a peripheral having the at least one Bluetooth profile and the at least one Bluetooth profile are connected to each other; and a second connecting step in which the remaining one(s) of the multiple Bluetooth profiles is connected based on information about the connected peripheral.

The information about the peripheral may include at least one of a name of the peripheral, an address of the peripheral, and service information of the peripheral.

In the second connecting step, the Bluetooth profile may be connected automatically without being manipulated by a user.

The multiple Bluetooth profiles may be driven simultaneously.

The multiple Bluetooth profiles may be Bluetooth profiles for executing an application selected from a plurality of applications by a user.

The method may further include the step of determining whether the peripheral has all Bluetooth profiles required to execute the application or not, and, if the peripheral has all of the Bluetooth profiles, the second connecting step may connect the remaining Bluetooth profile(s).

The method may further include the step of determining whether the peripheral is able to drive the multiple Bluetooth profiles simultaneously, and, if it is determined that the peripheral is able to drive the multiple Bluetooth profiles simultaneously, the second connecting step may connect the remaining Bluetooth profile(s).

The foregoing and/or other aspects and utilities of the general inventive concept may be also achieved by a method for connecting Bluetooth profiles, the method including the steps of receiving a command to select one of a plurality of applications; connecting at least one of Bluetooth profiles required to execute the selected application to a peripheral; and, if the at least one Bluetooth profile is connected, additionally connecting a Bluetooth profile related to the connected Bluetooth profile to the peripheral.

The related Bluetooth profile may be a Bluetooth profile required to execute the selected application.

The method may further include the step of determining whether the peripheral has all Bluetooth profiles required to execute the selected application or not, and if it is determined that the peripheral has all of the Bluetooth profiles required to execute the selected application, the additional connecting step may connect the remaining Bluetooth profile(s).

The foregoing and/or other aspects and utilities of the general inventive concept may be also achieved by a method for connecting Bluetooth profiles, the method including the steps of receiving a first connecting command to connect a first Bluetooth profile to a peripheral, and, if the first connecting command is received, connecting the first Bluetooth profile to the peripheral and generating a second connecting command to connect a second Bluetooth profile, which is simultaneously used along with the first Bluetooth profile, to the peripheral and transmitting the second connecting command.

The foregoing and/or other aspects and utilities of the general inventive concept may be also achieved by a Bluetooth apparatus including a UI unit which receives a connecting command for at least one of multiple Bluetooth profiles, and a controller which, if the connecting command is received, connects a peripheral having the at least one Bluetooth profile and the at least one Bluetooth profile, and connects the remaining one(s) of the multiple Bluetooth profiles based on information about the connected peripheral.

The information about the peripheral may include at least one of a name of the peripheral, an address of the peripheral, and service information of the peripheral.

The controller may control such that the remaining Bluetooth profile(s) is automatically connected even if there is no connecting command for the remaining Bluetooth profile(s).

The multiple Bluetooth profiles may be driven simultaneously.

The multiple Bluetooth profiles may be Bluetooth profiles for executing an application selected from a plurality of applications by a user.

If it is determined that the peripheral has all Bluetooth profiles required to execute the application, the controller may control such that the remaining Bluetooth profile(s) is connected.

If it is determined that the peripheral is able to drive the multiple Bluetooth profiles simultaneously, the controller may control such that the remaining Bluetooth profile(s) is connected.

The foregoing and/or other aspects and utilities of the general inventive concept may be achieved by a Bluetooth apparatus including a UI unit which receives a command to select one of a plurality of applications, and a controller which connects at least one of Bluetooth profiles required to execute the selected application to a peripheral, and if the at least one Bluetooth profile is connected, additionally connects a Bluetooth profile related to the connected Bluetooth profile to the peripheral.

The related Bluetooth profile may be a Bluetooth profile required to execute the selected application.

If it is determined that the peripheral has all of the Bluetooth profiles required to execute the selected application, the controller may control such that the remaining Bluetooth profile is connected.

The foregoing and/or other aspects and utilities of the general inventive concept may be achieved by a Bluetooth apparatus, including a receiver which receives a first connecting command to connect a first Bluetooth profile to a peripheral; and a controller which, if the first connecting command is received, controls such that the first Bluetooth profile is connected to the peripheral, and generates a second connecting command to connect a second Bluetooth profile, which is used simultaneously along with the first Bluetooth profile, to the peripheral and transmit the second connecting command to the receiver.

### BRIEF DESCRIPTION OF THE DRAWINGS

These and/or other aspects and utilities of the present general inventive concept will become apparent and more readily appreciated from the following description of the embodiments, taken in conjunction with the accompanying drawings of which:

FIG. 1 is a schematic view illustrating a Bluetooth apparatus 100 which performs Bluetooth-communication with peripherals 200 according to an exemplary embodiment of the present general inventive concept;

FIG. 2 is a block diagram illustrating the Bluetooth apparatus 100 according to the exemplary embodiment of the present general inventive concept;

FIGS. 3A to 3C are views illustrating scenes which are displayed on a display part 145 in the process of selecting profiles according to exemplary embodiments of the present general inventive concept;

FIG. 4 is a flowchart illustrating a method for connecting profiles according to an exemplary embodiment of the present general inventive concept;

FIG. 5 is a flowchart illustrating a method for connecting profiles according to another exemplary embodiment of the present general inventive concept; and

FIG. 6 is a flowchart illustrating a method for connecting profiles according to still another exemplary embodiment of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like units throughout. The embodiments are described below in order to explain the present general inventive concept by referring to the numerals.

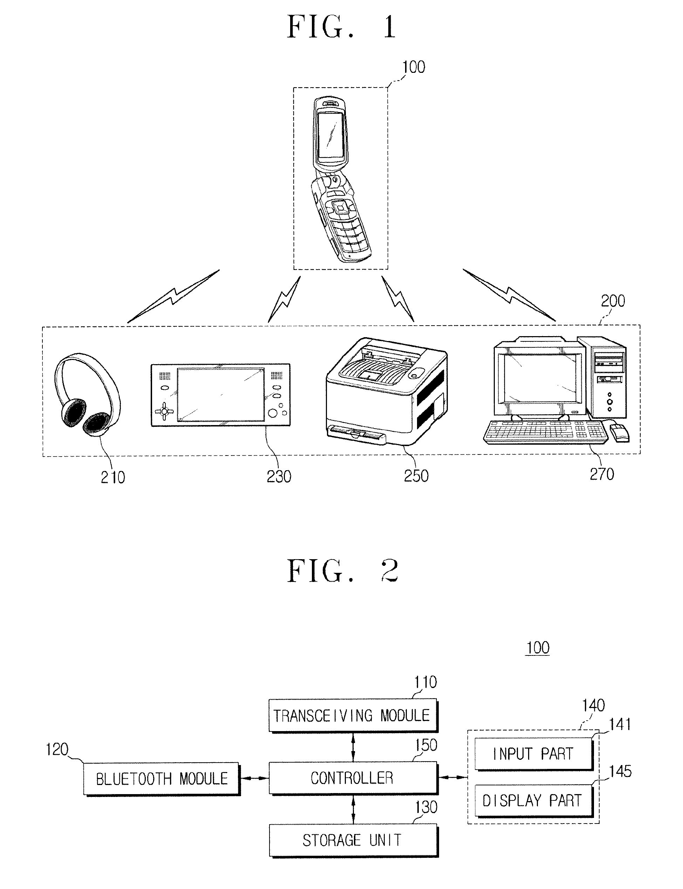

FIG. 1 is a schematic view illustrating a Bluetooth apparatus 100 which performs Bluetooth communication with peripherals 200 according to an exemplary embodiment of the present general inventive concept.

The Bluetooth apparatus 100 refers to an apparatus that supports the Bluetooth communication, and also, to an apparatus that is carried or manipulated by a user. In FIG. 1, a mobile phone is illustrated by way of an example but any device that can support the Bluetooth communication can be used as the Bluetooth apparatus 100.

Also, the peripherals 200 refer to apparatuses that support the Bluetooth communication, and also, to apparatuses that are provided to perform the Bluetooth communication with the Bluetooth apparatus 100 which is carried or manipulated by the user. Such peripherals 200 are located within a specific area which covers the Bluetooth communication.

In order to perform Bluetooth connection with the peripherals 200, the Bluetooth apparatus 100 performs (1) an inquiry process of inquiring the Bluetooth peripherals 200, (2) a pairing process of allowing mutual communications with the inquired peripherals 200 through authentication; and (3) a paging process of trying connecting to the peripherals 200 allowed for the communication.

The Bluetooth apparatus 100 performs Bluetooth-communication with one of the peripherals 200 connected thereto through the above processes. In FIG. 1, as the peripherals connectible through the above-described processes, a headset 210, a portable media player (PMP) 230, a printer 250, and a computer 270 are illustrated by way of an example.

The headset 210 is able to receive music contents such as music from the mobile phone through the Bluetooth communication and output the music contents.

The PMP 230 is able to receive multimedia contents such as music and motion picture from the mobile phone through the Bluetooth communication and replay the multimedia contents.

The printer 250 is able to receive image contents such as photos from the mobile phone through the Bluetooth communication and print the image contents.

The computer 270 is able to receive multimedia contents such as music, motion picture, photos, and texts from the mobile phone through the Bluetooth communication and provide these multimedia contents to the user.

The above-described peripherals 200 are merely examples for the convenience of explanation and any other device that can support the Bluetooth function can perform the Bluetooth communicate with the Bluetooth apparatus 100.

These peripherals 200 execute an application performing multiple functions (hereinafter, referred to as "multiple application") in addition to their respective inherent functions. For example, the PMP 230 performs a function of sending and receiving texts input through a touch pad (not illustrated) provided thereon with the mobile phone, in addition to its own inherent function of receiving the multimedia contents such as music and motion picture from the mobile phone and replaying the multimedia contents.

Also, if a command to execute the multiple application performing music transmission and text transmission simultaneously is input, the PMP 230 receives music and replays it and simultaneously sends and receives texts.

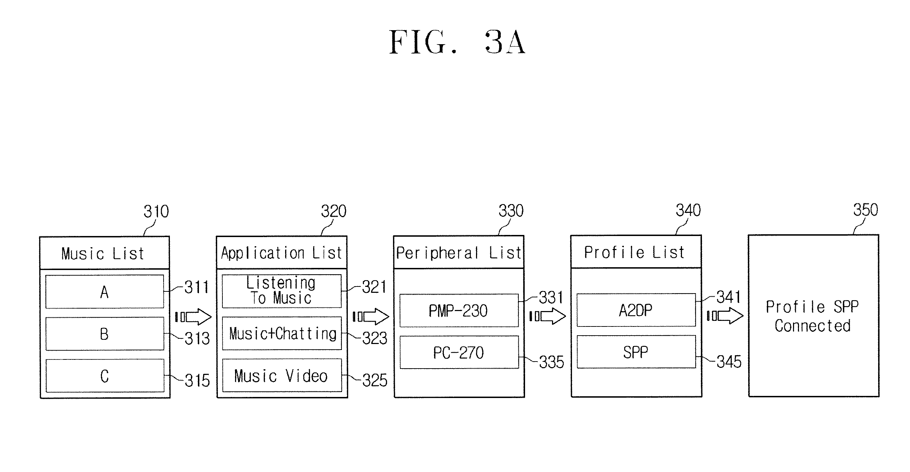

In order to perform such a multiple application, the Bluetooth apparatus 100 and the peripherals 200 have multiple Bluetooth profiles (hereinafter, referred to as "profiles") and drive the multiple profiles simultaneously. A process of driving the multiple profiles will be described below with reference to FIGS. 3A to 3C.

FIG. 2 is a block diagram illustrating the Bluetooth apparatus 100 according the exemplary embodiment of the present general inventive concept. The Bluetooth apparatus 100 sends and receives data with one of the peripherals 200 through the Bluetooth communication. In particular, the Bluetooth apparatus 100 according to the exemplary embodiment of the present general inventive concept drives all of the multiple profiles and performs the multiple application by a single manipulation.

The Bluetooth apparatus 100 illustrated in FIG. 2 includes a transceiving module 110, a Bluetooth module 120, a storage unit 130, a user interface (UI) unit 140, and a controller 150.

The transceiving module 110 sends and receives radio signals of data input and output through an antenna. More specifically, the transceiving module 110 performs a coding and spreading with respect to the data to be transmitted, thereby converting the data to radio frequency (RF) signals, and transmits the converted RF signals through the antenna. Also, the transceiving module 110 performs a de-spreading and a decoding with respect to RF signals received through the antenna, thereby recovering the signals to data.

The Bluetooth module 120 tries connecting for Bluetooth communication with the peripherals 200 through (1) the inquiry process, (2) the pairing process, and (3) the paging process. The Bluetooth module 120 stores connection information obtained through the above processes to the storage unit 130 which will be described below.

The connection information includes names, addresses and service information of the peripherals. The service information of the peripheral is about an application executable by the peripheral.

On the other hand, if the Bluetooth apparatus 100 has already obtained the connection information of a peripheral as it wishes to connect, the Bluetooth apparatus 100 is connected to the peripheral through only the (3) paging process without performing (1) the inquiry process and (2) the pairing process.

The storage unit 130 stores a program which is required for the controller 150 to control the entire operation of the Bluetooth apparatus 100 and data and information which are necessary for the operation of the Bluetooth apparatus 100.

In particular, the storage unit 130 stores the connection information of the peripheral which has been obtained through (1) the inquiry process, (2) the pairing process, and (3) the paging process, and stores profiles for the applications executable by the Bluetooth apparatus 100.

Also, the storage unit 130 may previously store names and addresses of the peripherals which are capable of Bluetooth communication, in addition to storing the obtained connection information of the peripherals.

The UI unit 140 receives a user's command to select content, an application, a peripheral and a profile as the user wishes, and provides the selected items to the user for the user's confirmation. The UI unit 140 includes an input part 141 and a display part 145.

The input part 141 is provided to allow the user to select content, an application, a peripheral, and a profile from a contents list, an application list, and a peripheral list, and a profile list. Also, the input part 141 receives a command to transmit selected content to a selected peripheral using a selected profile according to a selected application.

The display part 145 outputs scenes for the content list, the application list, the peripheral list and the profile list according to the user's command input through the input part 141. Also, the display part 145 replays the content received through the Bluetooth communication with the peripheral.

The controller 150 controls the entire operation of the Bluetooth apparatus 100 according to a user's manipulation input through the input part 141. More specifically, the controller 150 controls the transceiving module 110 such that the radio signals of the data input and output through the antenna are processed.

Also, the controller 150 controls the Bluetooth module 120 to inquire the connectible peripheral 200 and to try connecting to the inquired peripheral 200 for the Bluetooth communication. More specifically, the controller 150 controls such that some of the profiles stored in the storage unit 130 are connected to the peripheral 200 to execute the application as the user selected through the input part 141.

Also, the controller 150 determines if the application selected by the user is a multiple application or not, and if so, the controller 150 controls such that the multiple profiles are connected to the peripherals.

For example, if the user selects a multiple application 'a' which requires profiles 'b', 'c', and 'd', the controller 150 controls the Bluetooth module 120 to inquire the peripheral having the profiles 'b', 'c', and 'd' and connect the inquired peripheral to the profiles 'b', 'c', and 'd'.

If a command to give a priority to the profile 'b' when connecting the profiles is input by a user, the controller 150 controls the Bluetooth module 120 such that the profile 'b' is connected to the peripheral.

If the profile 'b' is connected to the peripheral, the controller 150 controls the Bluetooth module 120 to extract connection information used to connect the profile to the peripheral and store it to the storage unit 130 and to automatically connect the remaining profiles 'c' and 'd' to the peripherals using the connection information stored to the storage unit 130.

As a result, if all of the profiles 'b', 'c', and 'd' are connected to the peripheral, the controller 150 controls the transceiving module 110 to send and receive necessary data. As described above, the controller 150 controls the entire operation of the Bluetooth apparatus 100 to perform the application selected by the user.

Hereinafter, a process of selecting profiles to perform a multiple application will be described with reference to FIGS. 3A to 3C.

FIGS. 3A to 3C are views illustrating scenes displayed on the display part 145 and showing a process of selecting profiles according to various exemplary embodiments of the present general inventive concept. Among these, FIG. 3A illustrates a process of selecting a single profile and connecting it to a peripheral.

If a user manipulates the input part 141 to send music and chat simultaneously through Bluetooth communication with a peripheral, the controller 150 controls the display part 145 to display a 'music list' 310 on a scene.

The 'music list' 310 consists of music contents 'A', 'B', and 'C' and the controller 150 controls such that items corresponding to these music contents are displayed on the display part 145. Accordingly, item 'A' 311, item 'B' 313, and item 'C' 315 are displayed on the display part 145.

If there are more music contents, the controller 150 reduces sizes of items and displays all items on the scene. Alternatively, a scroll bar is provided on the right side of the 'music list' 310 such that all of the items are selectable.

If a user inputs a command to transmit content 'B' to a peripheral through the input part 141, the controller 150 controls the display part 145 to change the color of the item 'B' 313 and distinguish it from the non-selected items 'A' 311 and 'C' 315. After the color of the item 'B' 313 changes, the controller 150 controls such that an 'application list' is displayed on the display part 145 in order for the user to select an application to perform using the content 'B'.

The 'application list' 320 consists of applications such as 'Listening To Music', 'Music+Chatting', and 'Music Video', and the controller 150 controls such that items corresponding to these applications are displayed on the display part 145.

Accordingly, items 'Listening To Music' 321, 'Music+Chatting' 323, and 'Music Vide' 325 are displayed on the display part 145.

If the user inputs a command to performs the application 'Music+Chatting' through the input part 141, the controller 150 controls the display part 145 to change the color of the item 'Music+Chatting' 323 and distinguish it from the non-selected items 'Listening To Music' 321 and 'Music Video 325'.

After the color of the item 'Music+Chatting' 323 changes, the controller 150 controls such that a 'peripheral list' is displayed on the display part 145 in order for the user to select a peripheral to perform the application 'Music+Chatting'.

In this embodiment, peripherals 'PMP-230' and 'PC-270' are illustrated and the controller 150 controls such that items corresponding to these peripherals are displayed on the display part 145.

Accordingly, the item 'PMP-230' 331 and the item 'PC-270' 335 are displayed on the display part 145.

If the user inputs a command to select the peripheral 'PMP-230' through the input part 141, the controller 150 controls the display part 145 to change the color of the item 'PMP-230' 331 and distinguish it from the non-selected item 'PC-270' 335.

After the color of the item 'PMP-230' 331 changes, the controller 150 controls such that a 'profile list' is displayed on the display part 145 in order for the user to select a profile to connect to the peripheral 'PMP-230'.

Meanwhile, in order to transmit the 'music' content to the 'PMP-230', the profile 'A2DP' is required and both of the Bluetooth apparatus 100 and the 'PMP-230' should be connected to the profile'A2DP'.

Accordingly, the controller 150 controls the Bluetooth module 120 to determine whether or not the profile 'A2DP' exists in the 'PMP-230'. Also, in order to 'chat' with the 'PMP-230', the profile 'SPP' is required and also both of the Bluetooth apparatus 100 and the 'PMP-230' should be connected to the profile 'SPP'.

Accordingly, the controller 150 controls the Bluetooth module 120 to determine whether the profile 'SPP' exists in the 'PMP-230'. Also, in order to transmit the 'music' content to the 'PMP-230' and chat with the 'PMP-230' simultaneously, the 'PMP-230' should support a multi profile function of driving multiple profiles simultaneously. Accordingly, the controller 150 controls the Bluetooth module 120 to determine whether or not the 'PMP-230' supports the multi profile function.

If the above items are all checked, the controller 150 controls such that a 'profile list' is displayed on the display part 140 in order for the user to select a profile to connect to the peripheral 'PMP-230'.

According to the above description, these items are checked when one of the peripherals listed in the peripheral list 330 is selected. However, this is merely an example for the convenience of explanation. Therefore, these items may be checked before the peripheral list 330 is displayed. In this case, it is also possible that only peripherals satisfying these conditions are listed in the peripheral list 330.

Meanwhile, the controller 150 controls the display part 145 to display a 'profile list 340' listing items corresponding to profiles that should be connected to perform the application 'Music+Chatting'.

Accordingly, items 'A2DP' 341 and 'SPP' 345 corresponding to the profiles 'A2DP' and 'SPP' which have been determined as being owned by the 'PMP-230' and as being simultaneously driven are displayed on the display part 145.

If the user inputs a command to select the profile 'A2DP' through the input part 141, the controller 150 controls the display part 145 to change the color of the item 'A2DP' 341 and distinguish it from the non-selected item 'SPP' 345.

After the color of the item 'A2DP' 341 changes, the controller 150 controls the Bluetooth module 120 to connect the profile 'A2DP' of the Bluetooth apparatus 100 and the profile 'A2DP' of the peripheral 'PMP-230'.

That is, the controller 150 controls the Bluetooth module 120 to perform the Bluetooth connection with the 'PMP-230' through the pairing process of allowing a mutual communication through the authentication with the 'PMP-230' and the paging process of trying connecting to the 'PMP-230'.

In the pairing process, the Bluetooth apparatus 100 and the 'PMP-230' exchange their names and addresses. The controller 150 stores the name and the address received from the 'PMP-230' to the storage unit 130.

If the profile 'A2DP' of the Bluetooth apparatus 100 is connected to the profile 'A2DP' of the peripheral 'PMP-230', the controller 150 controls the Bluetooth module 120 such that the other profile 'SPP' required to execute the application 'Music+Chatting' is automatically connected. That is, the controller 150 controls the Bluetooth module 120 such that, even if there is no command to connect to the profile 'SPP' after the profile 'A2DP' is connected, the profile 'SPP' is automatically connected.

In order to notify that the profile 'SPP' has been connected, the controller 150 controls the display part 145 to display a message "Profile SPP connected".

As described above, only one profile is selected from the multi profiles for connecting so that a user can perform a desired application more conveniently.

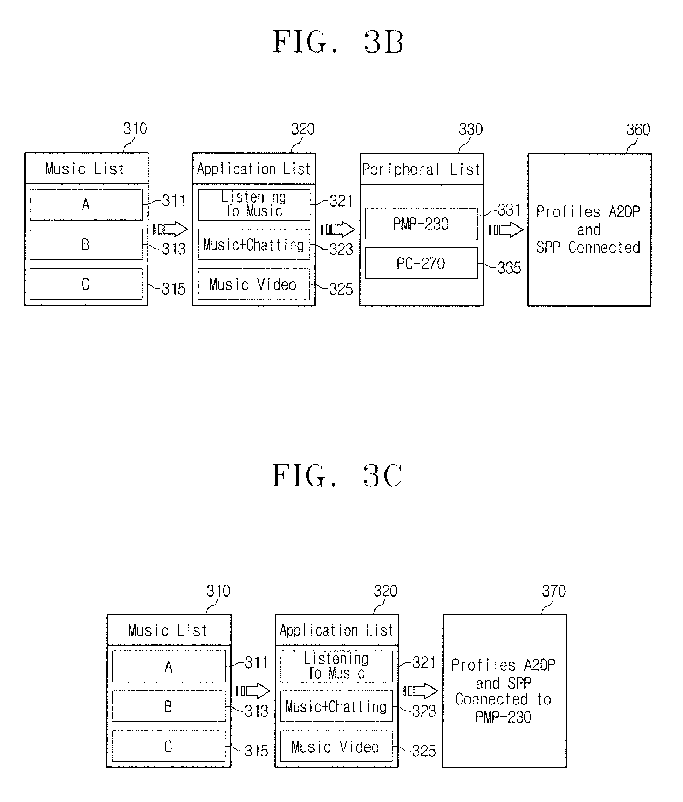

Meanwhile, FIG. 3B is a view illustrating a process of connecting to a peripheral by selecting an application only without selecting a profile.

The process of displaying the 'music list', the 'application list', and the peripheral list' is the same as that of FIG. 3A and thus its description is omitted.

If there are peripherals 'PMP-230' and 'PC-270', the controller 150 controls such that items corresponding to these peripherals are displayed on the display part 145. Accordingly, items 'PMP-230' 331 and 'PC-270' 335 are displayed on the display part 145.

If a user inputs a command to select the peripheral 'PMP-230' through the input part 141, the controller 150 controls the display part 145 to change the color of the item 'PMP-230' 331 and distinguish it from the non-selected item 'PC-270' 335.

After the color of the item 'PMP-230' 331 changes, the controller 150 extracts profiles to connect to the peripheral 'PMP-230'. The extracted profiles are profiles that are required to execute the application 'Music+Chatting'.

Accordingly, the controller 150 extracts profiles 'A2DP' and 'SPP' to execute the application 'Music+Chatting'. After that, the controller 150 controls the Bluetooth module 120 to connect any one of the 'A2DP' and the 'SPP'.

If the profile 'A2DP is connected in advance, the controller 150 stores an apparatus name and an address of the 'PMP-230' which is obtained in the process of connecting the profile 'A2DP' to the storage unit 130, and automatically connects the profile 'SPP' using the apparatus name and the address of the 'PMP-230' stored to the storage unit 130.

After that, the controller 150 controls the display part 145 to display a scene 360 showing a message "Profiles 'AD2DP' and 'SPP' connected".

As described, if an application is selected, profiles for executing the selected application are connected in sequence so that the user can perform a desired application more conveniently.

The above description is limited to the case where the profile 'A2DP' is connected in advance. However, this is merely an example for the convenience of explanation, and it is possible that the profile 'SPP' is connected in advance and then the profile 'A2DP is automatically connected.

FIG. 3C is a view illustrating a process of connecting profiles by selecting an application only if there is one peripheral.

The process of displaying a 'music list' and an 'application list' is the same as those of FIGS. 3A and 3B and thus its description is omitted.

If a user selects an application 'Music+Chatting', the controller 150 changes the color of the item 'Music+Chatting' 323 and distinguishes it from the non-selected items 'Listening To Music' 321 and 'Music Video' 325 as described above with reference to FIGS. 3A and 3B.

After the color of the item 'Music+Chatting' 323 changes, the controller 150 inquires a peripheral to execute the application 'Music+Chatting'.

If there is only one peripheral 'PMP-230' that can execute the application 'Music+Chatting', the controller 150 controls not to display a 'peripheral list' and controls the Bluetooth module 120 to extract profiles 'A2DP' and 'SPP' for executing the application 'Music+Chatting'. After that, the controller 150 controls the Bluetooth module 120 to connect any one of the 'A2DP' and 'SPP'.

If the profile 'A2DP' is connected in advance, the controller 150 stores the apparatus name and the address of the 'PMP-230' obtained in the process of connecting the 'A2DP to the storage unit 130, and automatically connects the profile 'SPP' based on the apparatus name and the address of the 'PMP-230' stored to the storage unit 130.

As described above, if there is one peripheral, a process of selecting the peripheral is omitted. Accordingly, if only an application is selected, profiles for executing the selected application are connected in sequence so that the user can perform a desired application more conveniently.

After that, the controller 150 controls the display part 145 to display a scene 360 showing a message "Profiles 'A2DP and SPP connected to 'PMP-230'.

In this embodiment, the profile 'A2DP' is connected in advance. However, this is merely an example. It is possible that the profile 'SPP' is connected in advance and then the profile 'A2DP is automatically connected.

Also, in the above embodiments, a multiple application for enjoying the music and chatting simultaneously is executed. However, the present general inventive concept is applicable to another multiple application.

For example, the present general inventive concept is applicable any multiple application such as an application for sending a photo and a text simultaneously and an application for sending a movie and a photo regarding characters of the movie.

Also, in the above embodiments, (1) the music list, (2) the application list, (3) the peripheral list, and (4) the profile list are displayed in sequence. However, the sequence is not limited to this. Accordingly, it is possible that the peripheral list is displayed for the inquiry of the peripheral and then another list is displayed.

Also, if there is one peripheral in FIG. 3C, a scene for allowing for selection of profile is directly displayed without displaying the peripheral list. This is applicable to another situation.

For example, if there is only an application 'Music+Chatting' that can be executed using the music content 'B', the controller 150 does not display an application list and displays a peripheral list only.

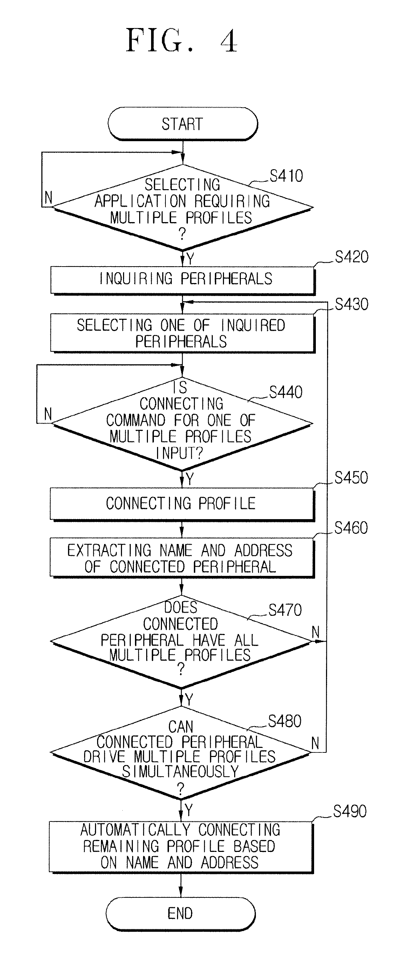

FIG. 4 is a flowchart illustrating a process of connecting profiles according to an exemplary embodiment of the present general inventive concept.

Referring to FIG. 4, the controller 150 determines whether an application requiring multiple profiles i.e. a multiple application is selected or not (S41 0).

If it is determined that a multiple application is selected (S410-Y), the controller 150 inquires peripherals which support the Bluetooth communication (S420). Also, the controller 150 selects one of the inquired peripherals (S430).

After that, the controller 150 determines whether a connecting command for any one of profiles that should be connected to execute the multiple application is input through the input part 141 or not (S440).

If it is determined that a connecting command for any one profile is input (S440-Y), the controller 150 connects the profile (S450).

More specifically, the controller 150 connects a profile to a peripheral through a pairing process of allowing a mutual communication through an authentication from the peripheral and a paging process of trying connecting to the peripheral allowed for the communication.

Also, the controller 150 extracts a name and an address of the opposite peripheral through the pairing process of allowing a mutual communication through an authentication from the inquired peripheral.

The controller 150 determines whether the peripheral connected to one profile has all profiles required to execute the multiple application or not using the name and the address of the peripheral (S470), and determines whether the multiple profiles can be driven simultaneously (S480).

More specifically, the controller 150 determines whether the peripheral has multiple profiles or not and also whether the multiple profiles can be driven simultaneously, using the apparatus name and the address of the peripheral previously stored to the storage unit 130.

However, this is merely an example for the convenience of explanation and another method may be provided for the Bluetooth apparatus 100 to know the profiles owned by the peripheral and whether the profiles can be driven simultaneously.

For example, a protocol which is previously defined between the Bluetooth apparatus 100 and the extracted peripheral determines whether all profiles are provided or not and whether the multiple profiles can be driven simultaneously. That is, the Bluetooth apparatus 100 determines whether the extracted peripheral has all profiles required to execute the multiple application and whether the multiple profiles can be driven simultaneously according to the predefined protocol.

If it is determined that the peripheral has multiple profiles (S470-Y) and if it is determined that the multiple profiles can be driven simultaneously (S480-Y), the controller 150 automatically connects the remaining profile based on the name and the address of the opposite peripheral extracted through the pairing process (S490).

As described above, by selecting and connecting only one of the multiple profiles, the user can perform a desired application more conveniently.

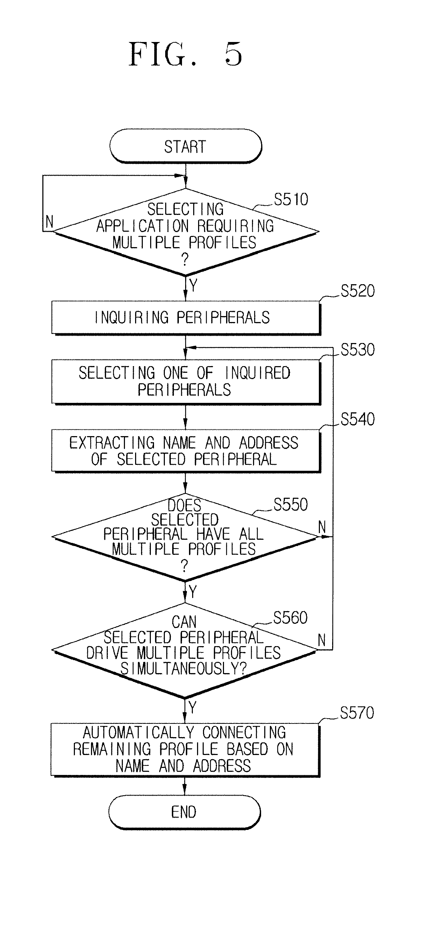

FIG. 5 is a flowchart illustrating a method for connecting profiles according to another exemplary embodiment of the present general inventive concept.

Referring to FIG. 5, the controller 150 determines whether an application requiring multiple profiles i.e. a multiple application is selected or not (S510).

If it is determined that the multiple application is selected (S510-Y), the controller 150 inquires peripheral which support the Bluetooth communication (S520). Also, the controller 150 selects any one of the inquired peripherals (S530).

After that, the controller 150 extracts the apparatus name and the address of the opposite peripheral through the authentication with the selected peripheral (S540).

The controller 150 determines whether the peripheral connected to one profile has all profiles required to execute the multiple application or not (S550), and also whether the multiple profiles can be driven simultaneously (S560), based on the extracted name and the address of the peripheral.

If it is determined that the peripheral has multiple profiles (S550-Y) and if it is determined that the multiple profiles can be driven simultaneously (S560-Y), the controller 150 connects all of the profiles required to execute the multiple application automatically based on the extracted name and address of the opposite peripheral (S570).

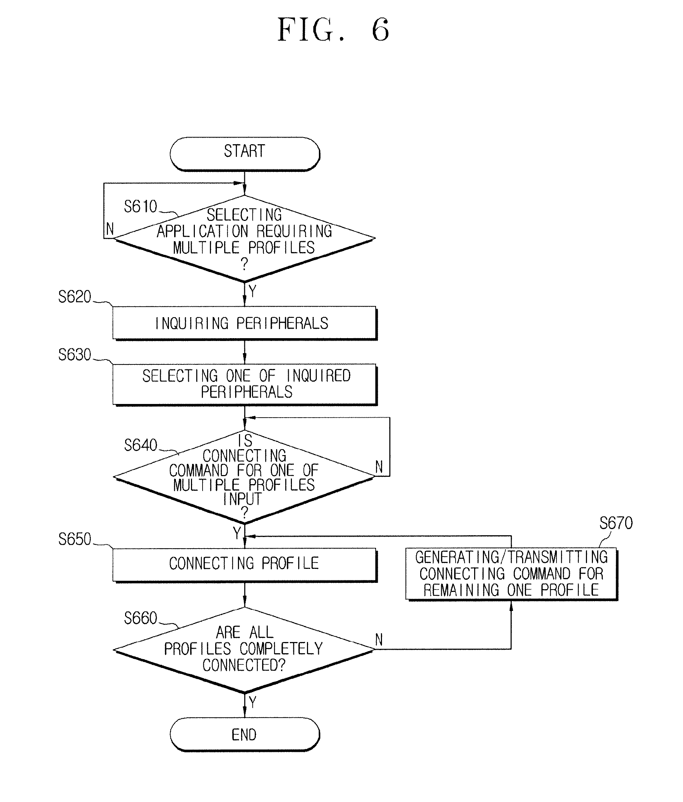

FIG. 6 is a flowchart illustrating a method for connecting profiles according to still another exemplary embodiment of the present inventive concept.

Referring to FIG. 6, the controller 150 determines whether an application requiring multiple profiles i.e. a multiple application is selected or not (S610).

If it is determined that the multiple application is selected (S610-Y), the controller 150 inquires peripherals which support the Bluetooth communication (S620). Also, the controller 150 selects any one of the inquired peripherals (S630).

After that, the controller 150 determines whether a connecting command for any one of the multiple profiles that are required to execute the multiple application is input or not (S460). Herein, the connecting command includes a connecting command input by a user and a connecting command generated by the controller 150.

If it is determined that a connecting command for any one of the profiles is input (S640-Y), the controller 150 connects this profile (S650).

More specifically, the controller 150 connects the profile to the inquired peripheral through a pairing process of allowing for a mutual communication through an authentication with the inquired peripheral and a paging process of trying connecting to the peripheral allowed for the communication.

The controller 150 determines whether the multiple profiles required to execute the multiple application are all connected or not (S660). If it is determined that all of the profiles are not connected (S660-N), the controller 150 generates a command regarding another profile and transmits the command to the input part 141.

The controller 150 connects another profile according to the connecting command input to the input part 141 (S650), and determines whether all of the profiles required to execute the multiple application are connected or not (S660).

If all of the profiles are completely connected through the above process, the multiple application is executed.

The controller 150 determines whether the peripheral connected to one profile has all profiles required to execute the multiple application or not (S550) and determines whether the multiple profiles can be driven simultaneously (S560), based on the extracted name and address of the peripheral.

If it is determined that the peripheral has the multiple profiles (S550-Y) and if it is determined that the multiple profiles can be driven simultaneously (S560-Y), the controller 150 automatically connects the profiles required to execute the application using the name and the address of the extracted opposite peripheral (S570).

As described above, if only one of the multi profiles is selected and connected, the remaining profile is automatically connected so that the application as desired by the user can be performed more conveniently.

According to the various exemplary embodiments of the present general inventive concept, the multiple Bluetooth profiles required to execute the application can be connected simply by connecting one Bluetooth profile. Accordingly, the user is allowed to execute the application more conveniently.

Although a few embodiments of the present general inventive concept have been illustrated and described, it will be appreciated by those skilled in the art that changes may be made in these embodiments without departing from the principles and spirit of the general inventive concept, the scope of which is defined in the appended claims and their equivalents.

## Claims

1. A method for connecting Bluetooth profiles, the method comprising:
a first connecting step in which, if a connecting command for at least one of multiple Bluetooth profiles is input, a peripheral having the at least one Bluetooth profile and the at least one Bluetooth profile are connected to each other; and
a second connecting step in which the remaining one(s) of the multiple Bluetooth profiles is connected based on information about the connected peripheral.

2. The method as claimed in claim 1, wherein the information about the peripheral includes at least one of a name of the peripheral, an address of the peripheral, and service information of the peripheral.

3. The method as claimed in claim 1 or 2, wherein, in the second connecting step, the Bluetooth profile is connected automatically without being manipulated by a user.

4. The method as claimed in any one of claims 1 to 3, wherein the multiple Bluetooth profiles are driven simultaneously.

5. The method as claimed in any one of claim 1 to 4, wherein the multiple Bluetooth profiles are Bluetooth profiles for executing an application selected from a plurality of applications by a user.

6. The method as claimed in claim 5, further comprising the step of determining whether the peripheral has all Bluetooth profiles required to execute the application or not,
wherein, if the peripheral has all of the Bluetooth profiles, the second connecting step connects the remaining Bluetooth profile(s).

7. The method as claimed in any one of claims 1 to 6, further comprising the step of determining whether the peripheral is able to drive the multiple Bluetooth profiles simultaneously,
wherein, if it is determined that the peripheral is able to drive the multiple Bluetooth profiles simultaneously, the second connecting step connects the remaining Bluetooth profile(s).

8. A method for connecting Bluetooth profiles, the method comprising the steps of:
receiving a command to select one of a plurality of applications;
connecting at least one of Bluetooth profiles required to execute the selected application to a peripheral; and
if the at least one Bluetooth profile is connected, additionally connecting a Bluetooth profile related to the connected Bluetooth profile to the peripheral.

9. The method as claimed in claim 8, wherein the related Bluetooth profile is a Bluetooth profile required to execute the selected application.

10. The method as claimed in claim 8 or 9, further comprising the step of determining whether the peripheral has all Bluetooth profiles required to execute the selected application or not,
wherein, if it is determined that the peripheral has all of the Bluetooth profiles required to execute the selected application, the additional connecting step connects the remaining Bluetooth profile(s).

11. A method for connecting Bluetooth profiles, the method comprising the steps of:
receiving a first connecting command to connect a first Bluetooth profile to a peripheral; and
if the first connecting command is received, connecting the first Bluetooth profile to the peripheral and generating a second connecting command to connect a second Bluetooth profile, which is simultaneously used along with the first Bluetooth profile, to the peripheral and transmitting the second connecting command.

12. A Bluetooth apparatus comprising:
a UI unit which receives a connecting command for at least one of multiple Bluetooth profiles; and
a controller which, if the connecting command is received, connects a peripheral having the at least one Bluetooth profile and the at least one Bluetooth profile, and connects the remaining one(s) of the multiple Bluetooth profiles based on information about the connected peripheral.

13. A Bluetooth apparatus comprising:
a UI unit which receives a command to select one of a plurality of applications; and
a controller which connects at least one of Bluetooth profiles required to execute the selected application to a peripheral, and if the at least one Bluetooth profile is connected, additionally connects a Bluetooth profile related to the connected Bluetooth profile to the peripheral.

14. A Bluetooth apparatus, comprising:
a receiver which receives a first connecting command to connect a first Bluetooth profile to a peripheral; and
a controller which, if the first connecting command is received, controls such that the first Bluetooth profile is connected to the peripheral, and generates a second connecting command to connect a second Bluetooth profile, which is used simultaneously along with the first Bluetooth profile, to the peripheral and transmit the second connecting command to the receiver.
